# FASCICULE DE BREVET EUROPEEN

(11) **EP 3 189 012 B1**
(45) Date de publication et mention de la délivrance du brevet: **31.07.2019**
(21) Numéro de dépôt: 15767318.7
(22) Date de dépôt: 02.09.2015
(51) Int. Cl.: C02F 1/44, B01D 61/02

(54) **PROCEDE DE DESSALEMENT D'EAUX CHAUDES SURSATUREES**
VERFAHREN ZUR ENTSALZUNG VON ÜBERSÄTTIGTEM WARMWASSER
METHOD FOR THE DESALINATION OF SUPERSATURATED HOT WATER

(30) Priorité: 02.09.2014 FR 1458186
(43) Date de publication de la demande: 12.07.2017
(73) Titulaire: Suez International, 92040 Paris la Défense Cedex (FR)
(72) Inventeur: DANIEL, Loïc, F-92500 Rueil Malmaison (FR)
(74) Mandataire: IPAZ
(86) Numéro de dépôt international: PCT/IB2015/056663
(87) Numéro de publication internationale: WO 2016/035024

(56) Documents cités:
- DE-A1-102007 024 424
- DE-A1-102012 112 215
- US-A1- 2009 081 105
- BOYSEN R E ET AL: "Hot water reverse osmosis in Goodyear, AZ", WATER QUALITY TECHNOLOGY CONFERENCE AND EXPOSITION 2008; 20081116 TO 20081120; CINCINNATI, OH, USA, AMERICAN WATER WORKS ASSOC, DENVER, COLO., US, 1 janvier 2008 (2008-01-01), pages 2190-2201, XP008173273, ISBN: 978-1-60560-993-5
- SNOW M J H ET AL: "New techniques for extreme conditions: high temperature reverse osmosis and nanofiltration", DESALINATION, ELSEVIER, AMSTERDAM, NL, vol. 105, no. 1, 1 juin 1996 (1996-06-01), pages 57-61, XP004018987, ISSN: 0011-9164, DOI: 10.1016/0011-9164(96)00058-6

## Description

La présente invention a pour objet un procédé de dessalement d'eaux chaudes sursaturées par osmose inverse.

L'osmose inverse est un des procédés les plus utilisés pour la préparation d'eau potable à partir d'eau souterraine ou de surface, notamment à partir d'eau de mer salée.

Ainsi plusieurs installations existent pour traiter de telles eaux chaudes sursaturées sur osmose inverse, notamment en Arabie Saoudite. Elles sont jusqu'à présent toutes conçues suivant la succession des étapes ci-dessous :
1. pompage dans la nappe phréatique,
2. refroidissement par des aéro-réfrigérants en vue d'abaisser la température de l'eau à un niveau acceptable par les membranes d'osmose inverse,
3. éventuellement une étape complémentaire combinant décarbonatation et/ou adoucissement et/ou désiliciage et/ou déferrisation, afin d'améliorer le rendement de l'osmose inverse,
4. ensuite une étape de filtration en un ou deux étages, afin de retenir les particules les plus fines qui risqueraient de colmater les membranes d'osmose inverse,
5. une injection de réactif chimique dit « séquestrant » qui permet d'améliorer le rendement de l'osmose inverse,
6. une étape de filtre à cartouche, avec un seuil de coupure nominal en général de 5 à 10 micromètres (mais pouvant, suivant les choix de conception, être au-dessus ou en-dessous de cette fourchette), cette étape agissant en protection contre des arrivées accidentelles de matières en suspension,
7. enfin l'étape d'osmose inverse, qui permet de dessaler l'eau jusqu'au niveau requis pour l'usage qui en sera fait.

Il est bien sûr concevable d'utiliser des échangeurs de chaleur sans perte de CO₂, mais ils se révèlent beaucoup plus coûteux que des aéro-réfrigérants ouverts qui prélèvent une partie de l'eau à traiter pour obtenir le refroidissement souhaité et sont donc économiquement disqualifiés dès que le débit à traiter est supérieur à quelques m³/h.

Pour limiter ou éviter la précipitation de carbonate, il est parfois procédé à l'injection d'un acide et/ou d'un séquestrant en amont des tours de refroidissement et parfois aussi, en complément, ces mêmes acides et séquestrant sont injectés en amont de la filtration. Dans les deux cas ces ajouts de réactifs ont pour objectif de diminuer le potentiel de précipitation lors du passage dans les tours de refroidissement et les filtres, et ainsi de protéger ces équipements contre l'accumulation dommageable de matières.

Toutefois ces solutions présentent de gros inconvénients liés à la précipitation de certains ions présents dans ces eaux chaudes.

En effet, ces eaux sont d'origine souterraine, et proviennent notamment de nappes contenues dans des réservoirs aquifères. Ces eaux naturelles sont saumâtres et peuvent contenir de fortes quantités de matières en suspension.

De plus, ces eaux chaudes (>40-45°C) arrivant sur les tours de refroidissement sont issues de nappes phréatiques profondes et présentent donc le plus souvent un pH faible (généralement inférieur à 7,5) donc une teneur variable mais élevée en CO₂, comparativement à des eaux naturelles de surface. Ces eaux contiennent de plus des teneurs variables mais significatives en ion calcium (Ca₂⁺) et bicarbonate (HCO₃⁻). Elles répondent donc, comme toutes les eaux naturelles, à l'équilibre dit calco-carbonique qui régit les équilibres entre les ions Ca²⁺, HCO₃⁻, CO₃²⁻, H⁺, OH⁻, ainsi que des espèces CO₂ et CaCO₃, suivant des lois d'équilibre connues, chacune régie par une constante et qui peuvent être représentées par les équations simplifiées ci-après :
[1]

   CO₂ + OH⁻ <=> HCO₃⁻
[2]

   HCO₃⁻ < = > H⁺ + CO3²⁻
[3]

   Ca²⁺ + CO₃²⁻ < = > CaCO₃

De ce fait, lors du passage dans l'aéro-réfrigérant la perte de CO₂ provoque une montée du pH, qui dépasse alors le pH d'équilibre. Afin de retrouver une situation d'équilibre dans ces nouvelles conditions, l'eau aura tendance à produire des ions carbonate CO₃²⁻ à partir des ions bicarbonates HCO₃⁻ suivant [2]. Mais ce carbonate supplémentaire provoque alors le déplacement de l'équilibre [3] vers l'apparition de carbonate de calcium CaCO₃, qui est insoluble et donc précipite.

Par ailleurs l'apport d'oxygène dans cette eau qui en est dépourvue provoque l'oxydation et la précipitation rapide du fer, généralement présent en quantité variable, pouvant aller jusqu'à quelques mg/l. Si le fer précipitait seul il serait en grande partie lessivé par l'eau de la tour, mais quand le carbonate de calcium précipite, le précipité de fer tend à s'y joindre, ce qui augmente plus encore la charge de colmatage dans la tour de refroidissement.

La précipitation et l'accumulation de précipités dans la structure d'échange de la tour de refroidissement présentent deux inconvénients majeurs :
1. l'alourdissement de la structure, conséquence la plus grave ; la structure peut même casser si elle n'est pas nettoyée à temps. Ce nettoyage périodique réduit la disponibilité du système.
2. une perte de rendement de refroidissement qui peut obliger à réduire le débit de l'installation.

La précipitation et l'accumulation de précipités dans le filtre provoquent :
1. le blocage des équipements mobiles (vannes, pompes),
2. la prise en masse du matériau filtrant, ce qui compromet son action filtrante et son lavage journalier automatisé et
3. l'accumulation de matières colmatantes, ce qui réduit la durée des cycles et dégrade la qualité de l'eau dirigée vers l'unité d'osmose inverse.

Une acidification en amont de la tour est parfois utilisée pour réduire le bicarbonate initialement présent et donc le potentiel de formation du carbonate. Mais avec des eaux contenant typiquement 3 milliéquivalent de bicarbonate cela représente une consommation d'acide chlorhydrique pouvant atteindre jusqu'à 110 mg/l d'HCI, soit près de 300 mg/l en acide commercial à 38%, ce qui représente un coût d'exploitation significatif ainsi que des difficultés de stockage. Par ailleurs la conversion (récupération) du système d'osmose inverse en aval profite très peu de cette élimination car la teneur en calcium n'est pas réduite et le risque de précipitation par sulfate de calcium demeure alors le facteur limitant pour la récupération par l'osmose inverse.

Il est parfois aussi utilisé un produit séquestrant qui va limiter ou retarder la précipitation dans la tour de refroidissement. Mais ce produit est assez coûteux, son application à cet endroit est encore empirique et il peut présenter des effets secondaires néfastes au niveau de la filtration en détériorant l'efficacité d'élimination des matières en suspension du filtre. Il est possible aussi que le produit séquestrant perde son efficacité au contact de la masse d'échange dans la tour de refroidissement ou de la masse filtrante dans le filtre, ce qui peut occasionner des post-précipitations préjudiciables à ces systèmes.

Ainsi les principaux inconvénients des procédés appliqués jusqu'à présent sont donc :
1. un risque important de précipitation de carbonate de calcium et de fer dans la tour de refroidissement et dans l'étape de filtration qui la suit,
2. une perte de rendement de refroidissement de la tour dû aux précipités accumulés,
3. une forte augmentation de la fréquence de maintenance de la tour de refroidissement, ce qui entraîne son usure accélérée et une perte de disponibilité,
4. un risque de dommages mécaniques à la tour de refroidissement si la maintenance n'est pas effectuée à temps,
5. une perte de performance de l'étape de filtration due aux précipités accumulés au cours d'un cycle,
6. un risque de prise en masse du média filtrant, de blocage des vannes du filtre et de bouchage et d'inactivation des capteurs du filtre,
7. des risques accrus de contamination de la membrane d'osmose inverse et
8. un coût élevé dû aux réactifs utilisés pour limiter ou éliminer la précipitation.

Il y a donc un besoin de disposer d'un procédé qui permette de diminuer voire d'éviter la précipitation et l'accumulation de précipités dans la structure d'échange de la tour de refroidissement et dans le filtre.

Or les inventeurs ont découvert qu'en supprimant l'étape de refroidissement avant l'osmose inverse, les risques de précipitation sont fortement diminués, voire éliminés.

Le document "Hot Water Reverse Osmosis in Goodyear, AZ" (Boysen, R. E. et al., Water Quality Technology Conférence and Exposition 2008, American Water Works Association, Denver, Colorado, p. 2190-2201) décrit un procédé de dessalement des eaux chaudes par osmose inverse sans étape de refroidissement préalable. Les eaux traitées ne présentent pas un potentiel de sursaturation du carbonate de calcium.

Ainsi la présente invention a pour objet un procédé de dessalement d'eaux chaudes sursaturées ayant une température comprise entre 40 °C et 80 °C, avantageusement entre 40 et 60 °C, comprenant la mise en contact de ladite eau chaude avec une membrane d'osmose inverse résistant à des températures comprises entre 40 et 80 °C sans étape de refroidissement préalable.

Au sens de la présente invention, on entend par eaux chaudes sursaturées, des eaux d'origine souterraine, et provenant notamment de nappes contenues dans des réservoirs aquifères, et se caractérisant principalement par :
- une température supérieure à 35°C, de préférence comprise entre 40°C et 80°C,
- un caractère saumâtre, c'est-à-dire que la somme des ions choisis parmi la liste calcium, magnésium, sodium, potassium, carbonates, bicarbonates, chlorures, sulfates ou un mélange de ceux-ci, est supérieure à 500 mg/l,
- un potentiel de sursaturation du carbonate de calcium, et
- une teneur en CO₂ importante leur conférant un pH d'équilibre inférieur à 7,5, et de préférence inférieur à 7.

De façon optionnelle, ces eaux peuvent également comprendre les composés choisis parmi la liste:
- une teneur en fer supérieure à 50 µg/l
- une teneur en manganèse supérieure à 25 µg/l
- Une teneur en silice supérieure à 10 mg/l,
- soufre sous forme colloïdale ou sous forme d'hydrogène sulfuré à une teneur supérieure à 10 µg/l,
- un ou plusieurs radionucléides, tels que le radium ou l'uranium, de sorte que l'activité alpha globale est supérieur à 0.5 Bq/l, ou
- un mélange de ceux-ci,
en teneurs élevées.

Par exemple, une eau chaude sursaturée à caractère saumâtre peut présenter les caractéristiques suivantes :

| | |
|---|---|
| Température | = 60°C |
| Calcium | = 360 mg/l |
| CO₂ | = 60 mg/l |
| pH | = 6,7 |
| HCO₃ | = 190 mg/l |
| Fer | = 3 mg/l |
| Manganèse | = 200 µg/l |
| Silice | = 15 mg/l |
| Activité Alpha globale | ≥ 0.5 Bq/l |

La mise en contact des eaux chaudes avec la membrane d'osmose inverse peut se faire par toute technique connue de l'homme du métier. Elles peuvent par exemple être pompées et amenées par des canalisations jusqu'à la membrane.

Conformément à l'invention, les membranes d'osmose inverse mises en oeuvre dans le procédé, peuvent être toute membrane d'osmose inverse résistant à des températures comprises entre 40 et 80 °C, notamment des membranes à base de polyamides et de polysulfone.

Dans un mode de réalisation avantageux de l'invention, l'eau brute extraite du puits est dirigée sur la membrane d'osmose inverse sans perte de charge afin d'éviter la perte de CO₂.

Dans un mode de réalisation avantageux de l'invention, le procédé comprend une étape de refroidissement sur le perméat dessalé de l'osmose inverse. Il n'y a alors aucun risque de précipitation, quelle que soit la technologie de refroidissement.

Dans un autre mode de réalisation avantageux de l'invention, le procédé peut comprendre, avant la mise en contact des eaux chaudes avec la membrane d'osmose inverse, une étape d'élimination des matières en suspension ou une étape d'addition d'un séquestrant ou les deux. L'étape d'élimination des matières en suspension sera requise dans le cas où l'eau brute comporte ou risque de comporter des matières en suspension issues du forage alors que l'ajout d'un séquestrant permet d'améliorer le rendement de l'étape de filtration par osmose inverse. L'homme du métier saura choisir à la lumière de ses connaissances générales et en fonction des types d'eau à traiter la ou les étapes supplémentaires qui seront nécessaires.

Dans un autre mode de réalisation avantageux de l'invention, si la pression des eaux brutes est insuffisante pour assurer les performances souhaitées par les membranes, les eaux chaudes peuvent être mises en pression avant leur mise en contact avec la membrane d'osmose inverse par tout moyen connu de l'homme du métier, notamment en utilisant une pompe.

Dans un autre mode de réalisation, la tour de refroidissement est positionnée en aval de la membrane d'osmose inverse permettant ainsi la réduction des coûts d'exploitation liés à l'encrassement de la tour de refroidissement, et de réduire les coûts d'investissement d'autre part grâce au positionnement de la tour sur la ligne du perméat dont le débit est plus faible que le débit d'alimentation.

Avantageusement, dans le cas où les eaux chaudes comprendraient du radium, ce mode de réalisation permet la rétentiondes radionucléides, notamment le radium ou l'uranium, sur la membrane d'osmose inverse.

Ce refroidissement du perméat de l'osmoseur permet d'éviter de contaminer l'air ambiant avec du radon qui est un élément très volatil issu de la désintégration du radium 226.

Outre ces avantages économiques, un tel agencement a l'avantage d'éliminer le risque de contamination de l'atmosphère par le radon puisque l'élément radium et le radon seront retenus par les membranes d'osmose inverse avant passage du perméat sur la tour de refroidissement.

Avec le procédé selon l'invention, pour une eau de forage ayant les caractéristiques suivantes :
- pH 6,7
- bicarbonate 190 mg/l HCO₃⁻
- calcium 130 mg/l Ca²⁺
- CO₂ 60 mg/l
- température 50°C
alors, l'osmose inverse pourra travailler à une conversion de 75% identique à celle obtenue avec le procédé actuel décrit précédemment mais pour un même débit d'eau produite en sortie de station, la tour de refroidissement n'aura que 75% de la taille de celle du procédé actuel pour une même température de restitution.

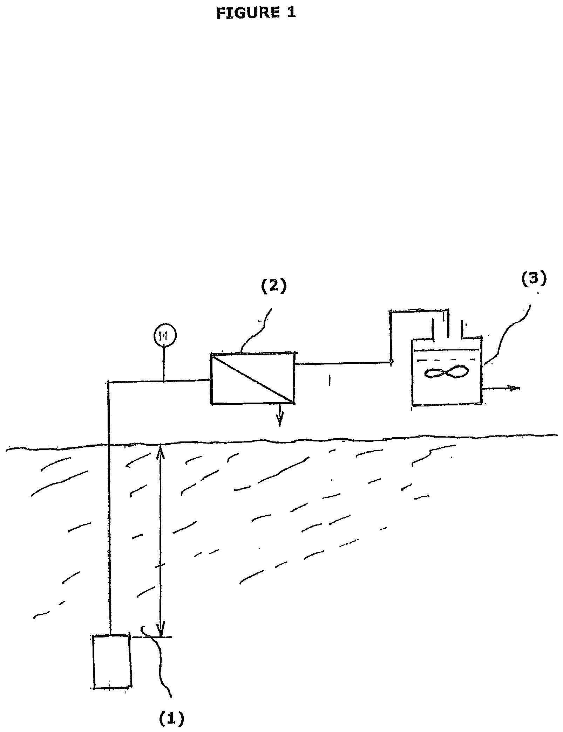

Afin de mieux faire comprendre le procédé objet de la présente invention, on en décrit ci-après un mode de mise en oeuvre. Il demeure bien entendu qu'il ne s'agit là que d'un exemple n'ayant aucun caractère limitatif. Au cours de cette description, on se réfère à la figure 1 des dessins annexés qui est un schéma illustrant les différentes étapes du procédé selon l'invention.

L'eau brute extraite du puits (1) est immédiatement dirigée vers le système d'osmose inverse (2), à l'aide d'une pompe (non représentée sur la figure), sans rupture de charge afin d'éviter la perte de CO2. Ce dernier passe presque totalement à travers la membrane vers le perméat (côté eau produite). En amont du système d'osmose inverse un manomètre (M) mesure la pression de sortie de l'eau brute en sortie du puits. Le perméat est ensuite refroidi à la température souhaitée et amené vers une cuve de stockage (3) puis acheminé vers le lieu d'utilisation.

Le procédé selon l'invention trouve son application principale dans le traitement des eaux naturelles profondes, chaudes et présentant un potentiel de sursaturation du carbonate de calcium.

Toutefois ce procédé peut également s'appliquer pour des productions :
- d'eaux destinées à la consommation humaine,
- d'eaux destinées à l'alimentation de procédés industriels, comme des eaux de lavage, des eaux entrant dans la fabrication du produit manufacturé, des eaux destinées à l'alimentation de chaudières, etc. ainsi que
- d'eaux destinées à l'irrigation.

Enfin ce procédé peut aussi s'appliquer au traitement d'eau résultant d'un procédé de fabrication industrielle qui apporterait un potentiel de sursaturation en carbonate de calcium dans une eau supérieure à 40-45°C, si on souhaite la recycler, en récupérer des composants ou la traiter avant rejet.

Par rapport au procédé jusqu'à présent utilisé tel que décrit ci-dessus, le procédé selon l'invention cumule plusieurs avantages :
- élimination du risque de précipitation dans toutes les étapes,
- tour de refroidissement de plus faible dimension pour un débit de production égal puisque ne traitant que le seul perméat de production (le rejet de saumure peut très bien être évacué chaud),
- tour de refroidissement de plus faible dimension puisque le refroidissement demandé, lié seulement à la température requise en sortie de l'usine, est moindre,
- aucun risque de colmatage de la tour de refroidissement, donc une disponibilité maximale et une limitation des coûts de maintenance,
- étape de filtration en amont de l'osmose inverse est inutile puisqu'il n'y a plus de matières en suspension à éliminer, donc une nette réduction des coûts d'investissement et d'exploitation. Elle pourra simplement être conservée si des matières en suspension sont suspectées dans l'eau brute directement issue du forage,
- pas d'élimination par voie chimique des bicarbonates (par dosage d'acide) ni de nécessité de réduire le risque de précipitation dans la tour de refroidissement et pendant l'étape de filtration (par l'application d'un séquestrant), donc une nette économie d'exploitation.

## Revendications

1. Procédé de dessalement d'eaux chaudes sursaturées ayant une température comprise entre 40°C et 80°C, comprenant la mise en contact desdites eaux chaudes avec une membrane d'osmose inverse résistant à des températures comprises entre 40 et 80°C sans étape de refroidissement préalable, lesdites eaux chaudes sursaturées étant **caractérisées par** une teneur en CO₂ importante leur conférant un pH d'équilibre inférieur à 7,5, en ce qu'elles présentent un potentiel de sursaturation du carbonate de calcium et en ce qu'elles comprennent des composés choisis parmi le calcium, le magnésium, le sodium, le potassium, les carbonates, les bicarbonates, les chlorures, les sulfates ou un mélange de ceux-ci, dont la somme est supérieure à 500 mg/l.

2. Procédé selon la revendication 1, **caractérisé en ce que** lesdites eaux chaudes sursaturées comprennent des teneurs variables mais significatives en ions calcium et bicarbonate.

3. Procédé selon l'une quelconque des revendications précédentes, **caractérisé en ce que** lesdites eaux chaudes sursaturées comprennent environ 3 milliéquivalent de bicarbonate.

4. Procédé selon l'une des revendications précédentes, **caractérisé en ce qu'**il comprend en outre une étape de refroidissement sur le perméat dessalé de l'osmose inverse.

5. Procédé selon l'une quelconque des revendications précédentes, **caractérisé en ce qu'**il comprend avant la mise en contact des eaux chaudes et de la membrane d'osmose inverse une étape d'élimination des matières en suspension ou une étape d'addition d'un séquestrant ou les deux.

6. Procédé selon l'une quelconque des revendications précédentes, **caractérisé en ce que** les eaux chaudes sont mises en pression avant leur mise en contact avec la membrane d'osmose inverse.

7. Procédé selon l'une quelconque des revendications précédentes, **caractérisé en ce que** les eaux chaudes sursaturées comprennent des composés choisis parmi le fer, le manganèse, la silice, le soufre ou un mélange de ceux-ci.

8. Procédé selon la revendication précédente **caractérisé en ce que** lesdites eaux comprennent une teneur en fer supérieure à 50 µg/l.

9. Procédé selon l'une quelconque des revendications 4 à 8, **caractérisé en ce que** le perméat est refroidi à une température au moins inférieure à 45°C.

10. Procédé selon la revendication 9, **caractérisé en ce que** le perméat est refroidi à une température inférieure à 40°C.

11. Procédé selon l'une quelconque des revendications précédentes, **caractérisé en ce que** les eaux chaudes sursaturées comprennent des radionucléides.

12. Procédé selon l'une quelconque des revendications 4 à 11, **caractérisé en ce que** le perméat desdites eaux chaudes est refroidi après son passage en membrane d'osmose.

13. Procédé selon l'une quelconque des revendications 4 à 12, **caractérisé en ce que** ladite étape de refroidissement du perméat est réalisée dans une tour de refroidissement positionnée en aval de ladite membrane d'osmose inverse.

## Patentansprüche

1. Verfahren zur Entsalzung von übersättigtem Warmwasser mit einer Temperatur zwischen 40 °C und 80 °C beträgt, mit dem In-Kontakt-Bringen des Warmwassers mit einer Umkehrosmosemembran, die gegenüber Temperaturen zwischen 40 °C und 80 °C beständig ist, ohne einen Schritt des vorangehenden Kühlens, wobei das übersättigte Warmwasser **gekennzeichnet ist durch** einen hohen CO₂-Gehalt, der ihm einen Gleichgewichts-pH-Wert unter 7,5 verleiht, dadurch dass es ein Calciumcarbonat-Übersättigungspotenzial aufweist, und dass es Komponenten aufweist, die unter Calcium, Magnesium, Natrium, Kalium, Carbonaten, Bicarbonaten, Chloriden, Sulfaten oder einer Mischung derselben gewählt sind, deren Summe über 500 mg/l liegt.

2. Verfahren nach Anspruch 1, **dadurch gekennzeichnet, dass** das übersättigte Warmwasser variable, jedoch signifikante Gehalte an Calcium- und Bicarbonationen aufweist.

3. Verfahren nach einem der vorhergehenden Ansprüche, **dadurch gekennzeichnet, dass** das übersättigte Warmwasser ungefähr 3 Milliäquivalente Bicarbonat aufweist.

4. Verfahren nach einem der vorhergehenden Ansprüche, **dadurch gekennzeichnet, dass** es ferner einen Schritt des Kühlens des entsalzten Permeats der Umkehrosmose aufweist.

5. Verfahren nach einem der vorhergehenden Ansprüche, **dadurch gekennzeichnet, dass** es vor dem In-Kontakt-Bringen des Warmwassers und der Umkehrosmosemembran einen Schritt des Entfernens von Schwebstoffen oder einen Schritt des Hinzufügens eines Komplexbildners oder beide aufweist.

6. Verfahren nach einem der vorhergehenden Ansprüche, **dadurch gekennzeichnet, dass** das Warmwasser vor dem In-Kontakt-Bringen mit der Umkehrosmosemembran mit Druck beaufschlagt wird.

7. Verfahren nach einem der vorhergehenden Ansprüche, **dadurch gekennzeichnet, dass** das übersättigte Warmwasser Komponenten aufweist, welche unter Eisen, Mangan, Silizium, Schwefel oder einer Mischung derselben gewählt sind.

8. Verfahren nach einem der vorhergehenden Ansprüche, **dadurch gekennzeichnet, dass** das Wasser einen Eisenghalt von mehr als 50 µg/l aufweist.

9. Verfahren nach einem der Ansprüche 4 bis 8, **dadurch gekennzeichnet, dass** das Permeat auf eine Temperatur abgekühlt wird, die mindestens unter 45 °C liegt.

10. Verfahren nach Anspruch 9, **dadurch gekennzeichnet, dass** das Permeat auf eine Temperatur abgekühlt wird, die unter 40 °C liegt.

11. Verfahren nach einem der vorhergehenden Ansprüche, **dadurch gekennzeichnet, dass** das übersättigte Warmwasser Radionuklide aufweist.

12. Verfahren nach einem der Ansprüche 4 bis 11, **dadurch gekennzeichnet, dass** das Permeat des Warmwassers nach dessen Durchtritt durch die Osmosemembran gekühlt wird.

13. Verfahren nach einem der Ansprüche 4 bis 12, **dadurch gekennzeichnet, dass** der Schritt des Kühlens des Permeats in einem Kühlturm erfolgt, der stromabwärts der Umkehrosmosemembran angeordnet ist.

## Claims

1. Method for desalination of hot supersaturated water having a temperature of between 40°C and 80°C, comprising contacting said hot water with a reverse osmosis membrane which is resistant to temperatures of between 40 and 80°C without a prior cooling step, said hot supersaturated water being **characterized by** a high CO₂ content, giving it an equilibrium pH of less than 7.5, in that it exhibits a calcium carbonate supersaturation potential and in that it comprises compounds selected from calcium, magnesium, sodium, potassium, carbonates, bicarbonates, chlorides, sulfates or a mixture thereof, with a total amount superior to 500 mg/l.

2. Method according to Claim 1, **characterized in that** said hot supersaturated water contains variable but significant levels of calcium ion (Ca²⁺) and bicarbonate ion (HCO₃⁻).

3. Method according to any of the preceding claims, **characterized in that** said hot supersaturated water contains about 3 milliequivalents of bicarbonate.

4. Method according to any of the preceding claims, **characterized in that** it further comprises a step of cooling of the desalinated permeate from the reverse osmosis.

5. Method according to any of the preceding claims, **characterized in that** it comprises, prior to contacting the hot water with the reverse osmosis membrane, a step of removing suspended matter or a step of adding a sequestrant, or both.

6. Method according to any of the preceding claims, **characterized in that** the hot water is pressurized before being contacted with the reverse osmosis membrane.

7. Method according to any of the preceding claims, **characterized in that** the hot supersaturated water further comprises compounds selected from iron, manganese, silica, sulfur or a mixture thereof.

8. Method according to the preceding claim, **characterized in that** the hot supersaturated water comprises an iron content greater than 50 µg/l.

9. Method according to any of claims 4 to 8, **characterized in that** the permeate is cooled to a temperature at least less than 45°C.

10. Method according to claim 9, **characterized in that** the permeate is cooled to a temperature less than 40°C.

11. Method according to any of the preceding claims, **characterized in that** the hot supersaturated water comprises radionuclides.

12. Method according to any of claims 4 to 11, **characterized in that** the permeate of said hot water is cooled following its osmosis membrane traversal.

13. Method according to any of claims 4 to 12, **characterized in that** said permeate cooling step is performed in a cooling tower positioned downstream of said reverse osmosis membrane.
